Europäisches Patentamt

European Patent Office

Office européen des brevets

(11) Numéro de publication: **0 117 231**

**A1**

(12) **DEMANDE DE BREVET EUROPEEN**

(21) Numéro de dépôt: 84810075.6

(22) Date de dépôt: 08.02.84

(51) Int. Cl.³: **G 01 B 11/02**

(30) Priorité: 11.02.83 CH 774/83

(43) Date de publication de la demande:
29.08.84 Bulletin 84/35

(84) Etats contractants désignés:
AT BE DE FR GB IT LU NL SE

(71) Demandeur: **Ateliers de Constructions Mecaniques de Vevey S.A.**
**CH-1800 Vevey(CH)**

(72) Inventeur: **Blanc, Jean-Pierre**
**Résidence de la Côte 40**
**CH-1110 Morges(CH)**

(72) Inventeur: **Carrard, Francis**
**Chemin de Montaux**
**CH-1027 Lonay(CH)**

(72) Inventeur: **Devenoges, Claude**
**Grosse-Pierre 13**
**CH-1110 Morges(CH)**

(74) Mandataire: **Roth, Pierre et al,**
**PIERRE ARDIN & CIE 22, rue du Mont-Blanc**
**CH-1211 Genève 1(CH)**

(54) Appareil optique de pilotage d'un outil.

(57) Une torche de soudage pilotée le long d'un chanfrein, d'une tête d'oxycoupage, d'un burin, d'une fraise, d'une grignoteuse, comprend un rayon lumineux (5) projeté sur une ligne de référence (2) où il dessine un spot (7) qui est diffusé notamment vers un récepteur (9) constitué d'éléments sensibles à la lumière (10).

La tache de lumière (13) tombant sur le récepteur (9) fournit deux signaux de réglage, suivant sa position (19) et sa largeur (14). Ces signaux sont utilisés pour commander les organes porteurs d'un appareil optique (1) de telle manière qu'il suive continuellement la ligne de référence (2) et qu'il en reste toujours à une même distance. Les mouvements de l'appareil optique (1) pilotent l'outil de travail de telle manière que sa trajectoire soit égale, respectivement homothétique à celle de l'appareil optique (1) par conséquent à la ligne de référence (2).

Fig.2

Croydon Printing Company Ltd.

EP 0 117 231 A1

**0117231**

## APPAREIL OPTIQUE DE PILOTAGE D'UN OUTIL

Les installations d'usinage, de découpage, de soudage dans lesquelles l'outil, par ex. torche de soudage, tête d'oxycoupage, de découpage thermique, un burin, une fraise, une grignoteuse, suit automatiquement le tracé d'un chanfrein de soudure - quel que soit son tracé - sont connues. Les procédés utilisés pour déceler la position du chanfrein et élaborer un signal de commande de position, agissant directement ou par l'intermédiaire de relais d'amplification, sont divers. En effet, on utilise déjà dans ce but des palpeurs mécaniques, magnétiques, optiques, pneumatiques et d'autres encore. Mais ces appareils sont délicats, leur mise au point est difficile. Leur fonctionnement est souvent aléatoire et l'entretien onéreux, principalement du fait des conditions très sévères d'utilisation : températures élevées, lumière, fumées, bruit, etc. régnant dans le voisinage de l'arc électrique de soudure, soit en un endroit où précisément l'appareil doit opérer.

Le but de la présente invention consiste en un perfectionnement à ce type d'appareil et concerne plus particulièrement un appareil optique détecteur de l'emplacement d'une ligne de référence formée par une arête située au bord d'une tôle, respectivement d'une feuille métallique ou autre, d'un gabarit à copier, du bord d'un trait de largeur suffisante dessiné sur un support, appareil optique porté par un bras et comprenant un émetteur de lumière dont la longueur d'onde peut être choisie dans la zone correspondant à la lumière visible ou dans celle des infrarouges, cet émetteur produisant un rayon lumineux qui parcourt un premier axe incident, tombe sous la forme d'un spot en un point de ladite ligne où il est diffusé et repart dans diverses directions, notamment dans celle d'un second axe de lumière diffusée reliant ce point à un récepteur dont la surface est constituée d'un grand nombre de cellules, chacune étant sensible au rayonnement reçu et produisant un signal électrique fonction de son éclairement, l'ensemble des signaux reçus par le récepteur fournissant des informations entrant dans un appareil électrique agissant sur les éléments porteur de l'appareil optique de telle manière que le spot de lumière tombant sur la ligne de référence dont le tracé peut être rectiligne ou curviligne, suive celle-ci lors de l'avancement de l'opération en cours, en maintenant la disposition de la ligne de référence et de l'appareil optique égale à une valeur de consigne qui peut être adaptée selon la nature de l'opération en cours, les déplacements de l'appareil optique commandant les déplacements concomitants d'un outil de telle façon que celui-ci suive une trajectoire homologue à la ligne de référence, caractérisé en ce que la position par rapport au récepteur de la tache lumineuse diffusée sur le récepteur par le spot tombant sur la ligne de référence, constitue un signal de réglage utilisé pour la commande du maintien à sa valeur de consigne de la distance entre l'appareil optique et la ligne de référence, et en ce que la largeur de la tache lumineuse tombant sur le récepteur constitue un signal de réglage utilisé pour la commande des déplacements transversaux de l'appareil optique par rapport à la ligne de référence.

Les 4 figures annexées représentent schématiquement le fonctionnement de l'appa-reil.

La fig.1 est un schéma du principe d'un appareil simplifié, où l'appareil optique suit le bord d'un trait dessiné sur un support.

La fig.2 est le schéma d'un appareil tel qu'il peut être réalisé où l'appareil optique suit un gabarit à copier.

La fig.3 met en évidence l'effet d'une variation de la distance de l'appareil optique par rapport à la tôle dans le cas de la commande d'une torche de soudage.

La fig.4 met en évidence l'effet d'une variation de la distance entre le spot et le chanfrein de soudage et parallèle à la tôle dans le cas de la commande d'une torche de soudage.

Les quatre figures montrent en outre le dessin rabattu du récepteur ainsi que la forme et la position de la tache lumineuse tombant sur lui.

Les appareils des fig. ci-dessus comprennent les pièces principales suivantes :

1.    appareil optique
2.    ligne de référence
3.    tôle
4.    émetteur de lumière
5.    rayon lumineux
6.    axe de la lumière incidente
7.    spot
8.    axe de la lumière diffusée
9.    récepteur
10.    cellules sensibles
11.    angle α, qui est le plus petit des deux angles des axes incident et
       diffusé par rapport à la tôle, ou au support ou au gabarit.

12. angle β, qui est le plus petit angle entre la surface de la tôle et celle du chanfrein de soudure

13. tache lumineuse tombant sur le récepteur

14. largeur de la tache lumineuse

15. lentille convergente du rayon incident

16. lentille convergente du rayon diffusé

17. miroir plan

18. axe de rotation du récepteur

19. déplacement de la position de la tache lumineuse sur le récepteur

20. bord d'un trait

21. support

22. gabarit à copier

23. arête située au bord d'une tôle

24. trait

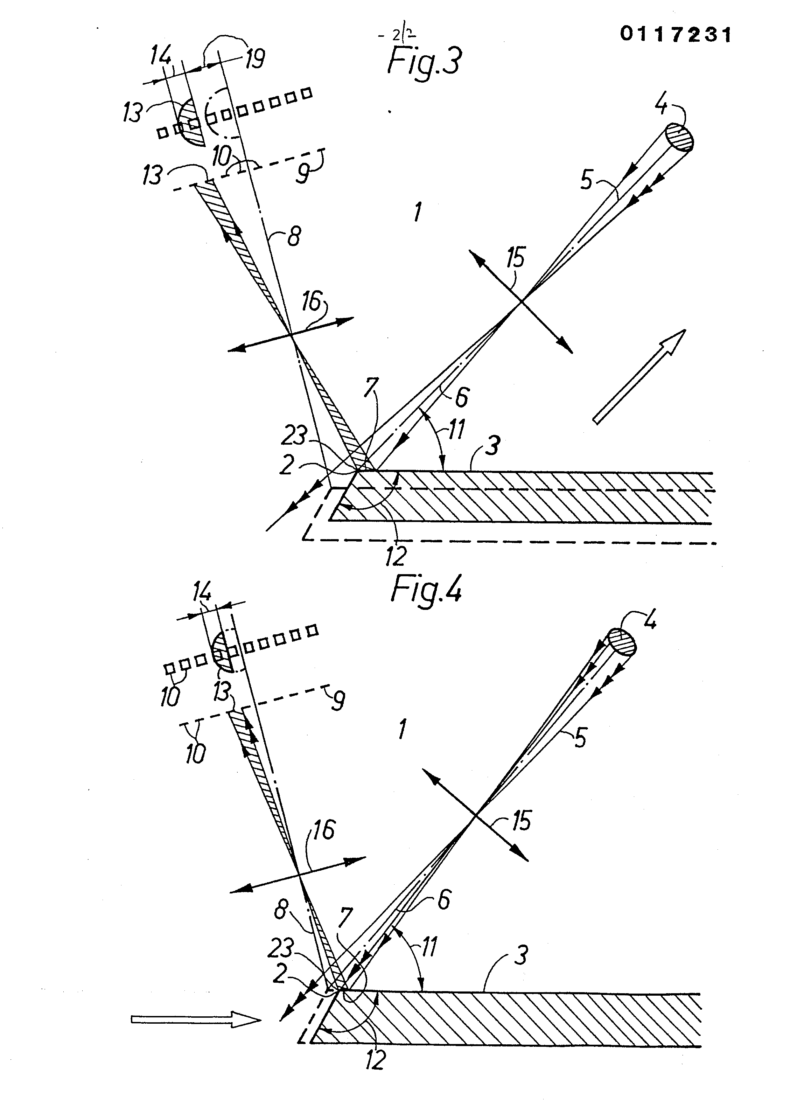

Dans le cas des fig.3 et 4, une seule des deux tôles à souder a été représentée, il va de soi que le chanfrein se referme sur un second objet qui doit être soudé au premier.

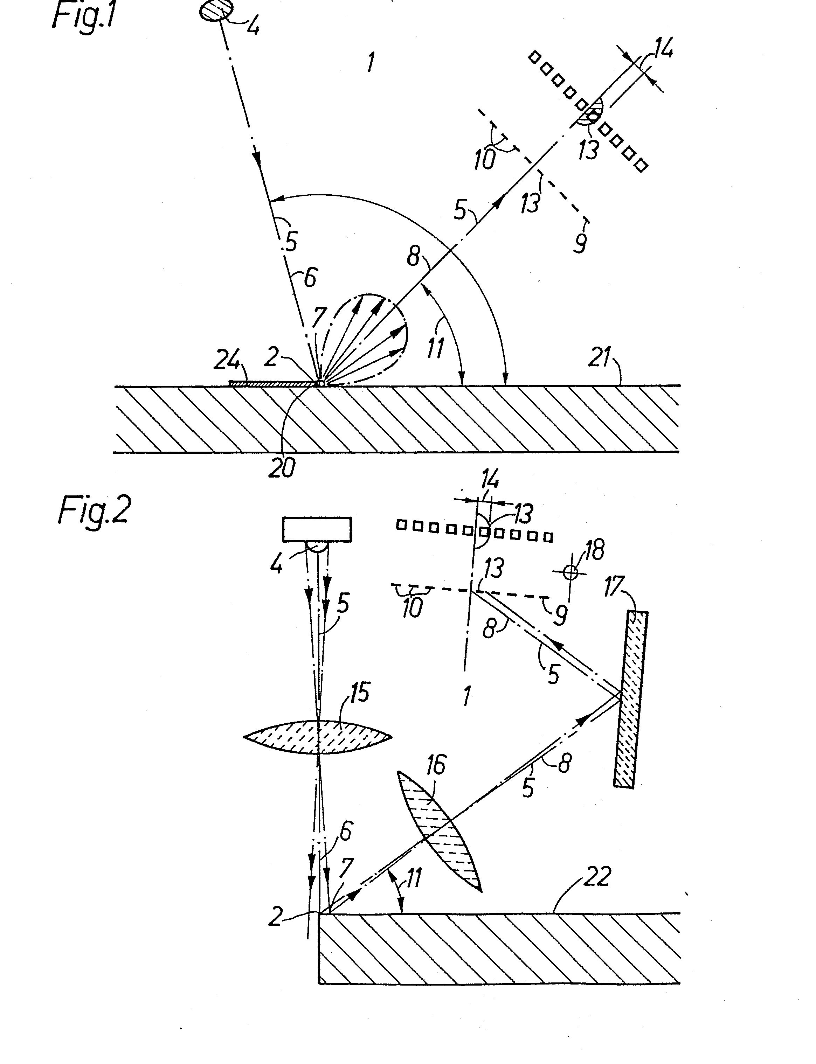

La fig.1 est un schéma fonctionnel simplifié; l'appareil émetteur de lumière 4 émet une lumière dirigée dans plusieurs directions et notament selon un axe 6 de la lumière incidente tombant au bord 20 constituant la ligne de référence 2 d'un trait 24 dessiné sur un support 21. Cette lumière tombe sur la surface de ce support et produit à cet endroit un spot lumineux 7. Ce support réfléchit à son tour la lumière reçue et la diffuse dans toutes les directions selon une intensité variable, fonction de l'angle. Il renvoie notamment cette lumière selon l'axe 8 de lumière diffusée qui tombe sur un récepteur 9. La surface de ce récepteur est constituée par un réseau de cellules sensibles 10 au rayonnement reçu, dont chacune d'entre elles produit un signal électrique fonction de son éclairement. Le principe de fonctionnement de l'appareil est le suivant: Lorsque l'appareil optique est disposé conformément au dessin, le spot lumineux 7 qui tombe sur le support 21 dessine sur lui, du fait de la présence du trait 24 qui absorbe la lumière, un spot en forme de demi-lune, puisque son axe 6 coïncide avec le bord 20. Cette image de demi-lune est diffusée à son tour en 13 sur le récepteur en conservant la même forme. Le diamètre du spot correspondant à la ligne de référence 2 qui coupe ce spot lumineux 7 en deux, se trouve précisément sur l'axe 8 de la lumière diffusée. Si l'axe du spot de la lumière incidente ne coïncidait pas avec le bord 20 la forme du spot lumineux sur la surface du support 21 ne serait pas une demi-lune, elle serait soit plus petite, soit plus grande comme le montre la fig. 4.

La largeur du spot lumineux est fonction du positionnement de l'appareil optique 1 par rapport à la ligne de référence 2, positionnement mesuré parallèlement à la surface 21. Il suffit donc de mesurer sur le récepteur la largeur de la tache lumineuse pour constituer un signal de réglage fonction de la position de l'appareil optique parallèlement à la surface du support 21. Dans le cas où la distance mesurée perpendiculairement à la surface de la tôle ne correspond pas à la valeur de consigne, le spot lumineux 7 se trouve déplacé par rapport au récepteur dans un sens ou dans l'autre, ainsi que le montre la fig. 3.

Les fig. 3 et 4 imagent l'effet de déplacement relatif entre l'appareil optique et le chanfrein. La position de consigne est représentée en traits discontinus.

Une translation dans la direction de l'axe de la lumière incidente conserve à la demi-lune, tombant sur le récepteur, la même forme, mais déplace l'image le long du récepteur (c.f. fig.3). Un déplacement parallèle à la surface du support 21 ou de la tôle 3 (fig.4) modifie la forme de la tache tombant sur le récepteur qui change de largeur 14.

Le positionnement 19 de la tache du spot lumineux sur la cellule sensible 10 constitue un signal de réglage permettant d'ajuster la distance entre l'appareil optique et la tôle. La combinaison de ces deux effets, largeur et positionnement du spot lumineux sur le récepteur, fournit deux signaux différents permettant de piloter l'appareil optique de telle façon qu'au cours d'une opération de travail, oxycoupage, soudage, usinage ou grignotement, celui-ci soit maintenu en permanence selon le schéma de la fig. 1 où l'axe de la lumière incidente 6 tombe précisément sur la ligne de référence 2. Cette disposition des rayons optiques présente, dans le cas d'opérations de soudage, le grand avantage de ne concerner que l'arête 2 d'une des deux tôles en soudage, arête qui conserve toujours la même forme lors du soudage de tôles épaisses nécessitant plusieurs passes de la torche de soudage, jusqu'à l'achèvement de l'opération. Si la somme des angles $\alpha$ et $\beta$ est plus petite que 180°, la lumière émise par l'émetteur 4 et tombant dans le chanfrein, est réfléchie dans toutes les directions par ce chanfrein et notamment contre l'autre face du chanfrein, mais elle ne peut être renvoyée en direction du récepteur et perturber l'information qu'il reçoit.

La fig.2 représente une disposition plus constructive de l'appareil dont le fonctionnement reste le même que celui de la fig.1. Dans cette construction, l'émetteur de lumière a été remplacé par une diode émettrice de lumière dont la longueur d'onde correspond aux infrarouges. Cette lumière traverse une première lentille convergente 15 qui concentre tous les rayons qu'elle reçoit sur la ligne de référence 2 du gabarit à copier 22 qui, comme précédemment, renvoie la lumière 5 selon l'axe de la lumière diffusée 8. Cette lumière traverse une seconde lentille convergente 16, tombe sur un miroir plan 17 qui la renvoie sur le récepteur. La présence de lentilles permet d'augmenter sensiblement l'éclairement du spot lumineux 7, par conséquent celui de la tache lumineuse 13 tombant sur le récepteur.

Le miroir plan 17 a pour effet de dévier le rayon, et de permettre de loger le récepteur 9 plus près de l'émetteur de lumière 4 afin de réduire les dimensions de l'appareil optique. Il aurait également été possible de monter un miroir plan entre la diode émettrice et la lentille convergente 15, ce qui aurait permis de déplacer cette diode et de réduire encore les dimensions de l'appareil.

Le fonctionnement de l'ensemble reste le même. Le spot lumineux produit en 7 est renvoyé en 13 et permet d'élaborer les deux signaux de réglage nécessaires pour la commande du positionnement par rapport à la ligne de référence 2. Dans le cas d'une construction de cette nature où l'on utilise des lentilles, il convient d'orienter le récepteur de telle façon que l'image qu'il reçoit soit nette sur tout son pourtour. A cet effet, il est nécessaire de le faire pivoter autour d'un axe de rotation 18 qui est perpendiculaire au plan des axes 6 et 8.

Le récepteur peut être constitué de photodiodes allongées, de telle façon que chacune d'entre elles puisse recevoir dans sa longueur le diamètre du spot lumineux, et disposées l'une à côté de l'autre sur un rang dont l'axe est placé dans le même plan que les axes des lumières incidente et diffusée.

Les quatre dessins ne mentionnent que l'appareil optique. Il va de soi que cet appareil est logé dans un coffret et qu'il est tenu au-dessus du chanfrein de soudure par un bras auquel il est relié par des mécanismes permettant de le déplacer de telle façon que sa distance, par rapport à la tôle, respectivement au gabarit 22 au support 21, puisse être maintenue égale à une valeur de consigne, et qu'il suive automatiquement le tracé de la ligne de référence 2 lors de l'avancement de l'opération de travail en cours.

Dans le cas de travaux de soudure, cet appareil optique pourrait être fixé sur la torche de soudage elle-même, et commander les éléments mécaniques de positionnement de cette torche de telle façon qu'elle suive le chanfrein de soudage comme ci-dessus.

Afin d'éviter que l'arc électrique de soudage ne vienne perturber le fonctionnement de l'appareil optique, celui-ci est situé au-devant de l'électrode, à une distance suffisante pour être à l'abri de l'ambiance que cette électrode provoque (température, fumées, éclairage, projection de particules, etc.).
L'appareil de commande peut comprendre un dispositif électronique enregistrant et mémorisant après enregistrement les mouvements de l'appareil optique et commandant les mouvements de la torche de soudage avec un certain retard correspondant à la distance séparant l'appareil optique de l'appareil de soudage et à la vitesse d'avancement de l'appareil de soudure, de telle façon que l'appareil de soudage suive le chanfrein même si son tracé est curviligne.

Comme le montrent les fig., les positions de l'émetteur de lumière 4 et du récepteur 9 peuvent être inversées, l'angle 11 correspondant une fois à la lumière incidente (fig.3 et 4) et l'autre fois à la lumière diffusée (fig. 1 et 2).

Lors de travaux répétitifs d'oxycoupage et d'usinage, la machine-outil où l'oxycoupeuse peut être commandée de telle manière que l'opération en cours est effectuée sur une pièce dont les dimensions sont différentes, plus grandes ou plus petites que celles du gabarit utilisé pour la commande. Il convient de prendre les précautions nécessaires de telle façon que les trajectoires de l'outil par rapport à la pièce en travail et celles de l'appareil optique par rapport au gabarit soient homothétiques.

0117231

## REVENDICATIONS

1.

Appareil optique (1) détecteur de l'emplacement d'une ligne de référence (2) formée par une arête située au bord d'une tôle, respectivement d'une feuille métallique ou autre, d'un gabarit à copier, du bord d'un trait de largeur suffisante dessiné sur un support, appareil optique (1) porté par un bras et comprenant un émetteur de lumière (4) dont la longueur d'onde peut être choisie dans la zone correspondant à la lumière visible ou dans celle des infrarouges, cet émetteur produisant un rayon lumineux (5) qui parcourt un premier axe incident (6), tombe sous la forme d'un spot (7) en un point de ladite ligne où il est diffusé et repart dans diverses directions, notamment dans celle d'un second axe de lumière diffusée (8) reliant ce point à un récepteur (9) dont la surface est constituée d'un grand nombre de cellules (10), chacune étant sensible au rayonnement reçu et produisant un signal électrique fonction de son éclairement, l'ensemble des signaux reçus par le récepteur fournissant des informations entrant dans un appareil électrique agissant sur les éléments porteurs de l'appareil optique de telle manière que le spot (7) de lumière tombant sur la ligne de référence (2) dont le tracé peut être rectiligne ou curviligne, suive celle-ci lors de l'avancement de l'opération en cours, en maintenant la disposition de la ligne de référence (2) et de l'appareil optique (1) égale à une valeur de consigne qui peut être adaptée selon la nature de l'opération en cours, les déplacements de l'appareil optique (1) commandant les déplacements concomitants d'un outil de telle façon que celui-ci suive une trajectoire homologue à la ligne de référence (2), caractérisé en ce que la position (19) par rapport au récepteur (9) de la tache lumineuse (13) diffusée sur le récepteur par le spot (7) tombant sur la ligne de référence (2), constitue un signal de réglage utilisé pour la commande du maintien à sa valeur de consigne de la distance entre l'appareil optique et la ligne de référence, et en ce que la largeur (14) de la tache lumineuse (13) tombant sur le récepteur (9) constitue un signal de réglage utilisé pour la commande des déplacements transversaux de l'appareil optique (1) par rapport à la ligne de référence (2).

0117231

2.

Appareil optique selon la revendication 1, caractérisé en ce que l'émetteur de lumière (4) est constitué par une diode émettrice d'une radiation infrarouge.

3.

Appareil optique selon la revendication 1 et/ou 2, caractérisé en ce que le récepteur (9) est constitué par un réseau de photodiodes (10) produisant chacune un signal électrique fonction de l'éclairement qu'elle reçoit.

4.

Appareil optique selon la revendication 3, caractérisé en ce que les photodiodes (10) sont disposées le long d'une ligne droite contenue dans le même plan que celui formé par les axes des rayons incident (6) et diffusé (8) de la lumière.

5.

Appareil optique selon la revendication 1, caractérisé en ce qu'il comprend au moins une lentille convergente (15) traversée par le rayon incident (6) et qui forme l'image de la source lumineuse sur le support de la ligne de référence et/ou au moins une lentille (16) convergente traversée par le rayon diffusé (8) qui forme l'image de la ligne de référence (2) sur le récepteur (9).

6.

Appareil optique selon la revendication 1, caractérisé en ce qu'il comprend au moins un miroir plan (17) qui renvoie les rayons incident (6) et/ou diffusé (8) permettant le déplacement de la source lumineuse (4), respectivement du récepteur (9) dans le plan des rayons incident (6) et diffusé (8) en vue de réduire les dimensions de l'appareil.

7.

Appareil optique selon la revendication 5, caractérisé en ce qu'il comprend un moyen permettant d'incliner le récepteur par pivotement autour d'un axe (18) perpendiculaire au plan des rayons incident (6) et diffusé (8), l'inclinaison de l'émetteur étant choisie en fonction du grandissement consécutif à la présence d'une lentille (16) convergente traversée par le rayon diffusé (8) et allant vers le récepteur (9) et permettant d'améliorer la netteté de l'image de la ligne de référence (2) projetée sur le récepteur (9).

8.

Appareil optique selon la revendication 1, caractérisé en ce qu'il comprend des élements qui mesurent sa position par rapport au bras porteur et produisent des signaux de commande qui agissent sur la position d'au moins un outil pour commander son déplacement et assurer son maintien dans une bonne position lors de l'exécution du travail en cours.

9.

Appareil optique selon la revendication 8, caractérisé en ce que le dispositif de commande du déplacement de l'outil comprend un organe de traitement de données enregistrant les mouvements de l'appareil optique, les mémorisant et agissant sur l'outil de manière à ce qu'il suive une trajectoire homologue à la ligne de référence, ce dernier mouvement étant retardé par rapport au mouvement de l'appareil optique.

10.

Appareil optique selon une ou plusieurs des revendications ci-dessus 1 à 9, caractérisé en ce que l'outil est constitué par une torche de soudage et en ce que la ligne de référence (2) suivie par l'appareil optique (1) est réalisée par une arête d'un bord d'un chanfrein de soudage d'une tôle, respectivement d'une feuille métallique ou autre, et en ce que dans le plan de coupe formé par les axes incident et diffusé, la somme des angles $\alpha$ et $\beta$ soit inférieure à $\pi$, $\alpha$ étant le plus petit des deux angles (11) des axes incident et diffusé par rapport à la surface de la feuille, et $\beta$ étant l'angle (12) le plus petit entre la surface de la feuille et celle du chanfrein de soudure.

11.

Appareil optique selon une ou plusieurs des revendications ci-dessus 1 à 9, caractérisé en ce que l'outil est constitué par une tête d'oxycoupage d'une tôle, respectivement de découpage thermique d'une feuille, et en ce que la ligne de référence suivie par l'appareil optique est réalisée par le bord d'un gabarit de copiage ou d'un trait dessiné sur un support.

12.

Appareil optique selon une ou plusieurs des revendications ci-dessus 1 à 9, caractérisé en ce que l'outil est constitué par un burin ou une fraise ou une grignoteuse, monté sur une machine-outil correspondante et en ce que la ligne

0117231

de référence suivie par l'appareil optique est réalisée par le bord d'un gabarit de copiage ou d'un trait dessiné sur un support.

13.
Appareil optique selon la revendications 11 et/ou 12, caractérisé en ce que la trajectoire de l'outil et la ligne de référence sont homothétiques.

Fig.1

Fig.2

Fig.3

Fig.4

Office européen
des brevets

**RAPPORT DE RECHERCHE EUROPEENNE**

EP 84 81 0075

## DOCUMENTS CONSIDERES COMME PERTINENTS

| Catégorie | Citation du document avec indication, en cas de besoin, des parties pertinentes | Revendication concernée | CLASSEMENT DE LA DEMANDE (Int. Cl. ³) |
|---|---|---|---|
| A | DE-A-2 554 086 (IBM DEUTSCHLAND) * Page 6; revendications 1,3-5,7,9,10; figures 1-3 * | 1-3,6, 8,9 | G 01 B 11/02 |
| | --- | | |
| A | DE-A-3 024 698 (R. HESS) * Revendications 3,4 * | 1,11, 13 | |
| | --- | | |
| A | FR-A-2 216 556 (COMP. ELECTRO-MECANIQUE) * Pages 4,5; revendications 1,2,7; figure 3 * | 1,3,6-8 | |
| | --- | | |
| A | FR-A-2 188 818 (COMP. ELECTRO-MECANIQUE) * En entier * | 1,5,6, 8,9 | |
| | ----- | | **DOMAINES TECHNIQUES RECHERCHES (Int. Cl. ³)** G 01 B |

Le présent rapport de recherche a été établi pour toutes les revendications

| Lieu de la recherche | Date d'achèvement de la recherche | Examinateur |
|---|---|---|
| LA HAYE | 15-05-1984 | SEIFERT H.U. |

CATEGORIE DES DOCUMENTS CITES

X : particulièrement pertinent à lui seul
Y : particulièrement pertinent en combinaison avec un autre document de la même catégorie
A : arrière-plan technologique
O : divulgation non-écrite
P : document intercalaire

T : théorie ou principe à la base de l'invention
E : document de brevet antérieur, mais publié à la date de dépôt ou après cette date
D : cité dans la demande
L : cité pour d'autres raisons

 

& : membre de la même famille, document correspondant

OEB Form 1503. 03.82